# EUROPEAN PATENT SPECIFICATION

(11) **EP 2 781 086 B1**
(45) Date of publication and mention of the grant of the patent: **11.03.2020**
(21) Application number: 11877269.8
(22) Date of filing: 13.12.2011
(51) Int. Cl.: E21B 44/00, E21B 47/002, E21B 49/00, H04N 7/18

(54) **DOWN HOLE CUTTINGS ANALYSIS**
BOHRKLEINANALYSE
ANALYSE DE DÉBLAIS DE FORAGE AU FOND DU TROU

(43) Date of publication of application: 24.09.2014
(73) Proprietor: Halliburton Energy Services Inc., Houston, Texas 77032 (US)
(72) Inventor: GRAVES, W.V. Andrew, Lafayette, Louisiana 70507 (US); ROWE, Matthew Dennis, Lafayette, Louisiana 70508 (US)
(74) Representative: Patel, Nikesh
(86) International application number: PCT/US2011/064644
(87) International publication number: WO 2013/089683

(56) References cited:
- WO-A1-82/02573
- US-A- 5 663 559
- US-A1- 2005 216 197
- US-A1- 2007 165 225
- US-A1- 2009 087 911
- US-A1- 2010 089 652
- US-A1- 2010 135 536
- US-A1- 2011 272 144
- US-B1- 6 386 297
- US-B2- 7 446 885
- US-B2- 7 835 568
- GUILHERME I R ET AL: "Petroleum well drilling monitoring through cutting image analysis and artificial intelligence techniques", ENGINEERING APPLICATIONS OF ARTIFICIAL INTELLIGENCE, PINERIDGE PRESS, SWANSEA, GB, vol. 24, no. 1, 1 February 2011 (2011-02-01), pages 201-207, XP027534455, ISSN: 0952-1976 [retrieved on 2010-11-29]

## Description

### Background

Increasing the effectiveness of pumping, sweeping, and drilling operations can reduce the cost of drilling wells for oil and gas exploration. One way of determining the efficiency of these process is to observe the characteristic features of down hole cuttings.

The traditional way of analyzing these cuttings is to catch a representative sample of the cuttings, and to engage a human inspector in visually reviewing the sample for physical changes. This method is slow, and prone to human error.

Non-patent publication ("Petroleum well drilling monitoring through cutting image analysis and artificial intelligence techniques' published in Engineering Applications of Artificial Intelligence, Pineridge Press, Swansea, GB, vol. 24, no. 1, 201-207, 01-02-2011, DOI:10.1016/j.engappai.2010.04.002) to Guilherme et al relates to a proposal of an intelligent system for drilling monitoring using cutting image analysis. During a well drilling process, the generated cutting is transported through a vibrating shale shaker until a final repository. An image acquisition captures images and sends them to a data analysis module, which is responsible for classifying the images obtained. If these images differ from the usual pattern, an alert signal is emitted to the shale operator.

The invention is defined in independent claims 1, 10 and 13, respectively. Particular embodiments of the invention are set out in the dependent claims.

### Brief Description of the Drawings

FIG. 1 is a block diagram of an apparatus and system according to various embodiments useful for understanding the invention.
FIG. 2 illustrates a drilling rig system embodiment useful for understanding the invention.
FIG. 3 is a flow chart illustrating several methods according to various embodiments useful for understanding the invention.
FIG. 4 is a block diagram of an article according to various embodiments useful for understanding the invention.

### Detailed Description

To address some of the challenges described above, as well as others, apparatus, systems, and methods for automatic analysis of down hole cuttings are described. Changes in data associated with features of the cuttings, perhaps extracted to determine trends, can be used to provide information about conditions surrounding drilling and pumping operations. In most embodiments, this mechanism improves the accuracy of determining the effectiveness during both types of operation, in real time. For example, monitoring real-time changes in particle size distribution, particle shape distribution, and particle volume changes using a relatively high data density can lead to increased sensitivity to changes in connections, sweeps, and drilling parameters.

More specifically, monitoring changes in formation cutting size, size distribution, shape, and volume during active drilling operations can lead to a better understanding of the current well condition, drilling effectiveness, and hole cleaning efficiency. The connection between changes in these parameters and operational conditions may be expressed in a number of ways, including:
- determining the existence of over-pressured formations by detecting an increase in cutting loads and changes in the size distribution of cuttings.
- determining bit and drilling efficiency through analysis of cutting volume, size, and shape.
- determining sweep efficiency by monitoring cutting volume during a sweep operation (e.g., the volume of cuttings increases with increasing sweep efficiency, and then decreases as cuttings are moved out of the hole).
- determining changes in a geological formation composition by monitoring cutting size, size distribution, and shape.

Some further examples relate to drilling rig performance. Thus, detected changes in the baseline aspect ratio of shale, with an average diameter/length proportion of about 1/5 to 1/10, may indicate the mud weight that is too low. Changes in the shape of shale, such as its baseline angularity, with edges above 90 degrees (splinter) or below 90 degrees, or below 30 degrees, may indicate triangular/cubic/flat cuttings of fallen shale. Changes in a baseline size distribution (e.g., when 95% of shale samples are from .8 inches to 1.2 inches in average length), might indicate recirculating cuttings. Changes in size distribution may also indicate changes in morphology. Increases over the average volume of cuttings during drilling may indicate an increased rate of penetration; if the volume increases, and the rate of penetration doesn't, then a washout may have occurred. Outliers of an abnormal size may indicate drilling problems (e.g., increased metal cutting volume could indicate a broken bit).

In some embodiments, measurements of the size, shape, and volume of cuttings over time is binned, to separate and quantify the occurrence of various measurements. The binned measurements can be used to determine an average, which is used to establish a baseline. Changes from the baseline can be alarmed at an operator's console, or displayed in conjunction with the current measurements, and used to change the execution of operations (e.g., putting more or less weight on the bit, or changing the composition of a drilling fluid) in some embodiments.

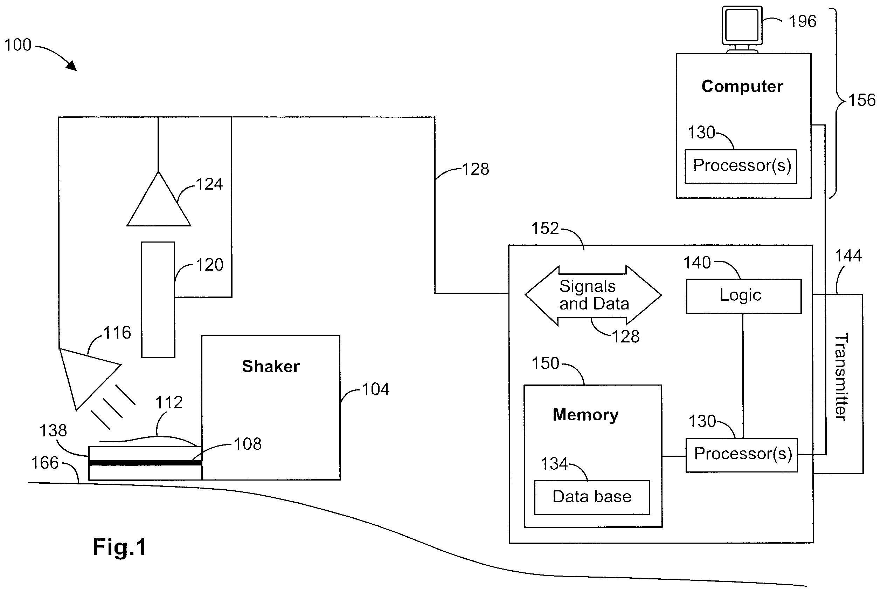

FIG. 1 is a block diagram of an apparatus 100 and system according to various embodiments useful for understanding the invention. In many embodiments, the apparatus 100 comprises a combination of an imaging device 124 and one or more processors 130. The imaging device 124 and/or the processors 130 may be located above the surface 166 of a geological formation, perhaps forming part of a data acquisition system 152. In some embodiments, any of the components in FIG. 1 may be located below the surface 166.

The apparatus 100 may also include logic 140, perhaps comprising a programmable data acquisition subsystem. The logic 140 can be used to acquire live video stream information 128, and other data, such as information from down hole, including the depth of the drill bit during a drilling operation.

A memory 150, located above or below the surface 166, can be used to store acquired image data, as well as other data (e.g., perhaps in a database 134). The memory 150 is communicatively coupled to the processor(s) 130.

In some embodiments, the imaging device 124 may comprise one or more CCD (charge coupled device) cameras, including low light or infrared cameras, to be used in conjunction with one or more sources of illumination 116, such as white light, tungsten light, infrared light, or light emitting diodes (LEDs) to illuminate cuttings 112 deposited on a shaker 104, such as on a shaker screen 108. The cameras may be focused on the screen 108 to capture images of cuttings 112 as they move across one or more shakers 104.

One or more energy modification devices 120, such as polarizers, filters, and/or beam splitters may be interposed between the cuttings 112 and the imaging device 124 to reduce the number of wavelengths seen by the device 124. The reduction in wavelengths allows drilling fluid and additives that may be in close proximity to the cuttings 112 to become relatively transparent, so that only the cuttings 112 are visible to the imaging device 124.

Imaging devices 124 can be connected to a data acquisition system 152, perhaps including the logic 140, and then to a computer (comprising one or more processors 130), or directly to a computer. The computer may use a three-dimensional (3D) face recognition program or particle size analysis program to measure and determine characteristics of the cuttings 112, such as size, volume, shape, etc. The live data can be analyzed in real-time by the software to provide shape and size distribution, along with the volume of the cuttings 112 coming over the shaker 104.

The illumination source 116 may comprise white lights for CCD cameras or near, mid, or far wave infrared lights, depending on the type of imaging device 124 that is used. The illumination source 116 may be used to intensify the image.

Optional energy modification device(s) 120, perhaps comprising polarizers, filters, and/or beam splitters may be chosen with respect to the type of drilling fluid that is used. Polarizers can be used to align light energy in either the P or S directions (so that the processed energy is p-polarized, or s-polarized), or to give a blend of P and S polarized energy. Beam splitters can be used to reduce the spectrum of the received energy to some selected range of wavelengths. Filters can be used to further narrow the range to a select spectrum prior to image detection.

The energy modification devices 120 may be adjustable to obtain good image contrast for detection of the cuttings 112 within a drilling fluid solution that has a dynamic composition. The selection of materials to use in the energy modification devices 120 may depend on the hazards of the environment, including the chemical solutions present. These materials may include glass, polymers, and metals, among others.

After energy emitted by the cuttings 112 is processed by the energy modification devices 120 (if present), the imaging device 124, such as a camera, receives the energy. The field of view, detection wavelength sensitivity, and resolution of the imaging device 124 may be used to determine the number and type of devices 124 that are focused on the shaker 104.

Imaging devices may comprise, for example, a pco 4000 CCD camera from Adept Turnkey Pty Ltd. with 4008 x 2672 pixel resolution for the visible light spectrum. If the conditions are such that a high sensitivity line scan camera may be useful, a Piranha HS-80-08K40 camera or Piranaha HS-40-04K40 camera, also from Adept Turnkey Pty Ltd. can be used. For near infrared imaging, an XEVA-FPA-1.7-640 camera from the LOT-Oriel Group Europe with an InGaAs array at 640 x 512 resolution can be used. For mid infrared imaging, a VarioTHERM® InSb camera from JENOPTIK Optical Systems Inc. with an InSb array at 640 x 512 resolution can be used. For far infrared detection, a Photon 640 camera from FLIR Systems, Inc. can be employed. Other devices can also be used.

The video stream information 128, or a processed form of the information, can be sent to a remote workstation 156 via coaxial cable. For longer data transmission distances, and to reduce the magnitude of possible interference, the information 128 may be converted to an optical format, and sent to the remote workstation 156 via fiber optic transmission. A transmitter 144 may be used to send the information 128, or a processed form of the information, to the workstation 156 via wires, fiber optics, or wirelessly.

Programs that provide face recognition and particle size analysis are commercially available. Three-dimensional face recognition software can be used to identify more than just the general shape of cuttings - the volume distribution of the cuttings can also be determined. The software can be trained or modified to identify cutting shapes, to determine volume distribution, and to provide data in a form that various monitoring software, such as Halliburton's INSITE Anywhere® web delivery system, can process.

These recognition and analysis programs include software that is similar to or identical to PAX-it image management and analysis software by MIS Inc. of Villa Park, IL and the Split-Online® automated digital image analysis system from Split Engineering LLC, as well as the SureMatch 3D facial recognition software suite available from Genex Technologies, Inc. of Bethesda, MD. Other software and processing instructions may be used, based on technical needs and flexibility.

The acquired video stream information 128 can be processed by programs similar to or identical to the INSITE Anywhere® web delivery system for real-time trend analysis. The processed data, which can be stored in the memory 150 (e.g., in the database 134) includes particle size distribution, particle shape distribution, and cutting volume. Thus, many embodiments may be realized.

For example, an apparatus 100 may comprise an imaging device 124 and one or more processors 130. The imaging device 124 may be configured to acquire live video stream information 128 including down hole cuttings image information. The processor(s) 130 may be configured to process the down hole cuttings image information to determine data that quantifies the shape, size distribution, and/or volume of the down hole cuttings. The processor(s) 130 may also be configured to publish changes in the data in conjunction with probable conditions associated with a borehole drilling operation or a borehole pumping operation.

Elements can be added to the path of energy travel to selectively reduce the amount of energy received by the imaging device 124. Thus, the apparatus 100 may comprise polarizers, filters, or beam splitters to intercept energy reflected or emitted by the down hole cuttings 112, and to reduce the amount of the energy received by the imaging device 124.

One or more cameras can be used as the imaging device. Thus, the imaging device 124 may comprise one or more visible light cameras and/or infrared cameras. Additional embodiments may be realized.

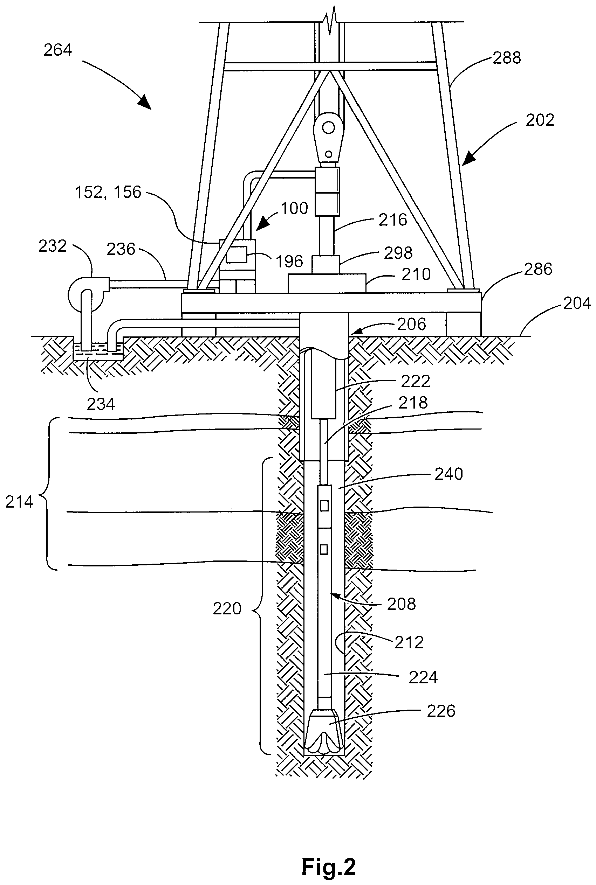

For example, in FIG. 2 it can be seen how a system 264 may also form a portion of a drilling rig 202 located at the surface 204 of a well 206. Drilling of oil and gas wells is commonly carried out using a string of drill pipes connected together so as to form a drilling string 208 that is lowered through a rotary table 210 into a wellbore or borehole 212. Here a drilling platform 286 is equipped with a derrick 288 that supports a hoist.

The drilling rig 202 may thus provide support for the drill string 208. The drill string 208 may operate to penetrate the rotary table 210 for drilling the borehole 212 through subsurface formations 214. The drill string 208 may include a Kelly 216, drill pipe 218, and a bottom hole assembly 220, perhaps located at the lower portion of the drill pipe 218.

The bottom hole assembly 220 may include drill collars 222, a down hole tool 224, and a drill bit 226. The drill bit 226 may operate to create a borehole 212 by penetrating the surface 204 and subsurface formations 214. The down hole tool 224 may comprise any of a number of different types of tools including MWD tools, LWD tools, and others.

During drilling operations, the drill string 208 (perhaps including the Kelly 216, the drill pipe 218, and the bottom hole assembly 220) may be rotated by the rotary table 210. In addition to, or alternatively, the bottom hole assembly 220 may also be rotated by a motor (e.g., a mud motor) that is located down hole. The drill collars 222 may be used to add weight to the drill bit 226. The drill collars 222 may also operate to stiffen the bottom hole assembly 220, allowing the bottom hole assembly 220 to transfer the added weight to the drill bit 226, and in turn, to assist the drill bit 226 in penetrating the surface 204 and subsurface formations 214.

During drilling operations, a mud pump 232 may pump drilling fluid (sometimes known by those of ordinary skill in the art as "drilling mud") from a mud pit 234 through a hose 236 into the drill pipe 218 and down to the drill bit 226. The drilling fluid can flow out from the drill bit 226 and be returned to the surface 204 through an annular area 240 between the drill pipe 218 and the sides of the borehole 212. The drilling fluid may then be returned to the mud pit 234, where such fluid is filtered. In some embodiments, the drilling fluid can be used to cool the drill bit 226, as well as to provide lubrication for the drill bit 226 during drilling operations. Additionally, the drilling fluid may be used to remove subsurface formation 214 cuttings created by operating the drill bit 226. It is the images of these cuttings that many embodiments operate to acquire and process.

Thus, referring now to FIGs. 1-2, it may be seen that in some embodiments, a system 264 may comprise a drilling mud screen 108 to receive drilling mud, and one or more image processing apparatus 100 as described previously. The image processing apparatus 100 may be configured to have a field of view that includes the drilling mud screen 108, wherein the apparatus 100 includes one or more imaging devices 124 and one or more processors 130, operating as described previously.

The drilling mud screen may form part of a shaker deck, such as a shale shaker deck. Thus, the drilling mud screen 108 may be included in a shaker deck 138.

The processed data (e.g., cutting shape, size, volume) can be displayed to show changes that have occurred, and the operational conditions that are likely to be associated with those types of changes. Thus, the system 264 may comprise a display 196 to display the changes and the probable conditions. These conditions may be used to implement real-time control in some embodiments (e.g., if falling shale is indicated by a dramatic increase in cutting size and volume, the weight on the bit may be reduced, or drilling may be halted entirely).

A transmitter can be used to send the data (e.g., cutting shape, size, volume) to a remote location, such as a workstation 156, perhaps for alarming, further processing/analysis, or real-time operational control. Thus, a system 264 may comprise a transmitter 144 to transmit at least a portion of the data to a remote processor. Many embodiments may thus be realized.

The apparatus 100, shaker 104, screen 108, cuttings 112, illumination sources 116, energy modification devices 120, imaging device 124, processors 130, database 134, shaker deck 138, logic 140, transmitter 144, memory 150, data acquisition system 152, workstation 156, display 196, drilling rig 202, well 206, drilling string 208, rotary table 210, borehole 212, Kelly 216, drill pipe 218, bottom hole assembly 220, collars 222, down hole tool 224, drill bit 226, mud pump 232, hose 236, system 264, drilling platform 286, and derrick 288 may all be characterized as "modules" herein. Such modules may include hardware circuitry, and/or a processor and/or memory circuits, software program modules and objects, and/or firmware, and combinations thereof, as desired by the architect of the apparatus 100 and system 264, and as appropriate for particular implementations of various embodiments. For example, in some embodiments, such modules may be included in an apparatus and/or system operation simulation package, such as a software electrical signal simulation package, a power usage and distribution simulation package, a power/heat dissipation simulation package, a communications simulation package, and/or a combination of software and hardware used to simulate the operation of various potential embodiments.

It should also be understood that the apparatus and systems of various embodiments can be used in applications other than for pumping and drilling operations, and thus, various embodiments are not to be so limited. The illustrations of apparatus 100 and systems 264 are intended to provide a general understanding of the structure of various embodiments, and they are not intended to serve as a complete description of all the elements and features of apparatus and systems that might make use of the structures described herein.

Applications that may include the novel apparatus and systems of various embodiments include electronic circuitry used in high-speed computers, communication and signal processing circuitry, modems, processor modules, embedded processors, data switches, and application-specific modules. Such apparatus and systems may further be included as sub-components within a variety of electronic systems, such as televisions, cellular telephones, personal computers, workstations, radios, video players, vehicles, signal processing for geothermal tools and smart transducer interface node telemetry systems, among others. Some embodiments include a number of methods.

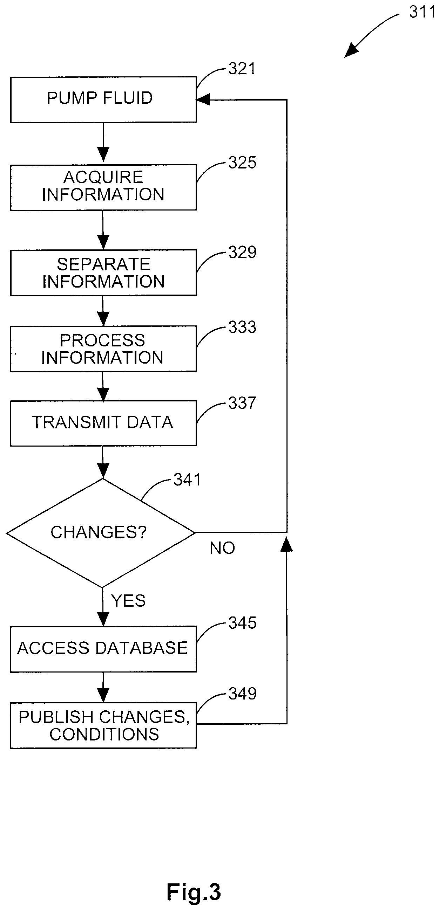

For example, FIG. 3 is a flow chart illustrating several methods 311 according to various embodiments useful for understanding the invention. The methods 311 may comprise processor-implemented methods, and may include, in some embodiments, acquiring down hole cuttings image information, and processing the information to produce data that quantifies or assists in characterizing selected drilling/pumping operational conditions. Changes in the data may be published and/or used to adjust the conduct of the operations in real-time, perhaps using feedback control, the general concept of which is well-known to those of ordinary skill in the art.

Publishing can mean displaying data in human-readable form (on a screen or hardcopy printout), recording the data on an electronic medium (memory or disk), and/or transmitting the data to another location, where the data is received, and remotely displayed, stored, etc. The publication of changes may be based on variations in values of the received data, as compared to thresholds, and a look-up table correlating the type and amount of change in the data to the expected conditions that are associated with that type of change.

Pumping operations may occur along with drilling operations, or separately, to include sweeping operations that return solids from down hole to the surface. Drilling operations may comprise drilling cement, milling casing, or drilling into a new formation. In many cases, the apparatus, systems, and methods described herein will be active when mud pumps are turned on at the well site, and fluid is flowing over the shakers. Sweeps can be used to push cuttings along the wellbore, while gels and the positive lift from drilling fluids move the cuttings to the shakers where they can be imaged. Some examples of such operations will now be described.

Real Time Operations (e.g., active drilling or pumping): in these embodiments, use of the apparatus, systems, and methods may focus on mitigating well control issues (e.g., changes in cutting size can serve as an early indicator of pressure shales). Well cleaning issues, such as low volume cutting clearance, may be indicated by the volume of cuttings falling off, so that sweeps are adjusted in frequency, mud gel viscosity is changed, or the rate of penetration is adjusted, as is known to those of ordinary skill in the art. Thus, real time operations can make use of various apparatus, systems, and methods to change the operations based on the changes that are discovered. Drilling parameters can be corrected to mitigate well control, to lessen wellbore damage, and to assess the efficacy of hole cleaning.

Review Operations (e.g., post well review): in these embodiments, a historical record of how well the bit cut the formation can be used to influence future bit/cutter selection. BHA (bottom hole assembly) design and well planning can be assisted by assessing the effectiveness of reamer/bit BHA configuration, in view of the historical cuttings record, including changes. Mud properties design can also be determined by the historical record. Thus, reviews can be used to assist in planning the creation of similar wells in similar fields better and faster, with less down time, along with mitigating known risks. Other embodiments may be realized.

For example, the cuttings can be swept from the bore hole to appear before the imaging device (e.g., on a shaker screen). Thus, a method 311 may begin at block 321 with pumping fluid into a borehole to move the down hole cuttings into the field of view of a selected imaging device.

The method 311 may continue on to block 325 with acquiring live video stream information from the imaging device, the information including down hole cuttings image information. The cuttings image information can be acquired as the cuttings pass over a drilling mud screen. Thus, the activity at block 325 may comprise acquiring the information from the imaging device having a field of view that includes a drilling mud screen.

The energy received by the imaging device can be adjusted, prior to receipt. Thus, the method 311 may continue on to block 329 to include reducing the number of the wavelengths of light used to create the live video stream information, prior to further processing. For example, the energy received by the imaging device can be adjusted to reduce or eliminate the contribution of drilling mud to the image feed, and increase the contribution of the down hole cuttings to the image feed. Therefore, when the live video stream information includes drilling mud image information, the activity at block 329 may include reducing the number of the wavelengths of light to separate the drilling mud image information from the down hole cuttings image information.

The method 311 may continue on to block 333 to include processing the down hole cuttings image information to determine data that quantifies at least one of a shape, a size distribution, or a volume of the down hole cuttings.

Quantifying data can be determined by supplying the down hole cuttings information to a particle size analysis program. Thus, the activity at block 333 may comprise processing the information using a particle size analysis algorithm.

Quantifying data can also be determined by supplying the down hole cuttings information to a face recognition program. Thus, the activity at block 333 may comprise processing the information using a three-dimensional facial recognition algorithm. In some embodiments, particle size analysis and recognition are combined.

The data (e.g., values of shape, size, volume) can be segregated into bins to more easily determine the distribution of the data in real time. Thus, the activity at block 333 may comprise binning the data to provide the size distribution of the cuttings, for example.

The data (e.g., values of shape, size, volume) can be sent on a continuous basis to other locations. Thus, the method 311 may continue on to block 337 to include substantially continuously transmitting at least a portion of the data to a remote location.

The data can be sent directly to a logging program, such as the log viewer software provided in conjunction with Halliburton's INSITE Anywhere® service. Thus, the activity at block 337 may comprise transmitting at least a portion of the data to a real time log monitoring application program.

The existence of changes in the data may be evaluated at block 341. If no substantial changes are detected in the monitored values of data that that quantify the shape, size distribution, and/or volume of the down hole cuttings, the method 311 may return back to block 321. On the other hand, if data change thresholds have been crossed, as determined at block 341, the method 311 may continue on to block 345, with accessing a decision table.

The decision table can be used to direct pumping and/or drilling operations. For example, changes of less than a preselected degree may be ignored. Changes of a greater magnitude may result in the method 311 continuing on to block 349 with publishing the changes in the data, in conjunction with probable conditions associated with a borehole drilling operation or a borehole pumping operation.

Trends in the data (e.g., consistent changes in shape, size, volume, according to threshold amounts of change of a selected time interval or intervals) can indicate progress or problems in an operation. Thus, the changes in data can be monitored as trends, and the trends can also be published for observation and action. Thus, the activity at block 349 may comprise publishing trends in the data.

The changes in shape, size distribution, or volume of the down hole cuttings can be correlated to a number of operational conditions. Thus, the conditions associated with the borehole drilling or borehole pumping operations may comprise one or more of rate of penetration, formation pore pressure, weight on bit, drill pipe torque, or drilling angle.

The changes in shape, size distribution, or volume of the down hole cuttings can also be correlated to operational efficiency, such as drill bit cutting efficiency, or sweeping efficiency. Thus, a running indication of efficiency can be published, if desired. Therefore, the activity at block 349 may comprise indicating an efficiency of a borehole drilling operation or a borehole pumping operation as a sweeping operation, based on the data.

It should be noted that the methods described herein do not have to be executed in the order described, or in any particular order. Moreover, various activities described with respect to the methods identified herein can be executed in iterative, serial, or parallel fashion. The various elements of each method (e.g., the methods shown in FIG. 3) can be substituted, one for another, within and between methods. Information, including parameters, commands, operands, and other data, can be sent and received in the form of one or more carrier waves.

Upon reading and comprehending the content of this disclosure, one of ordinary skill in the art will understand the manner in which a software program can be launched from a computer-readable medium in a computer-based system to execute the functions defined in the software program. One of ordinary skill in the art will further understand the various programming languages that may be employed to create one or more software programs designed to implement and perform the methods disclosed herein. The programs may be structured in an object-orientated format using an object-oriented language such as Java or C#. Alternatively, the programs can be structured in a procedure-orientated format using a procedural language, such as assembly or C. The software components may communicate using any of a number of mechanisms well known to those skilled in the art, such as application program interfaces or interprocess communication techniques, including remote procedure calls. The teachings of various embodiments are not limited to any particular programming language or environment. Thus, other embodiments may be realized.

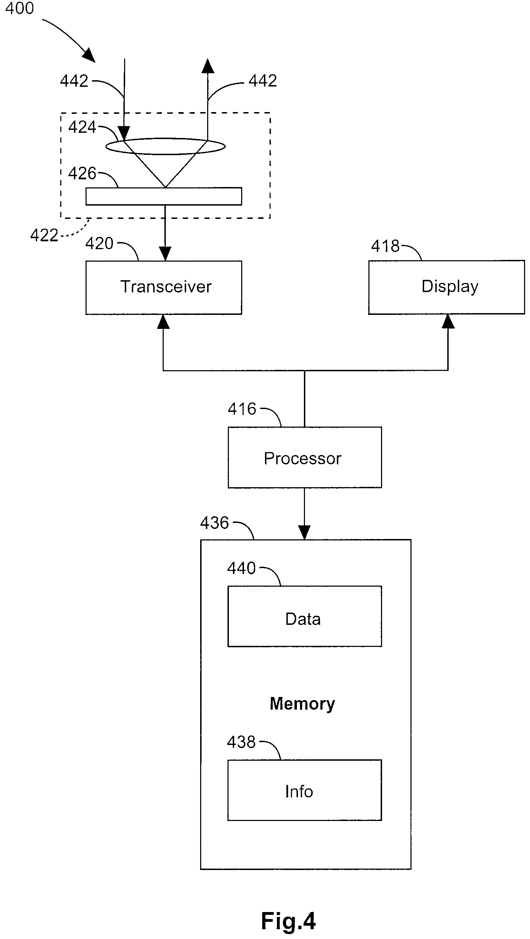

For example, FIG. 4 is a block diagram of an article 400 according to various embodiments useful for understanding the invention, such as a computer, a memory system, a magnetic or optical disk, or some other storage device. The article 400 may include one or more processors 416 coupled to a machine-accessible medium such as a memory 436 (e.g., removable storage media, as well as any tangible, non-transitory memory including an electrical, optical, or electromagnetic conductor) having associated information 438 (e.g., computer program instructions and/or data), which when executed by one or more of the processors 416, results in a machine (e.g., the article 400) performing any actions described with respect to the methods of FIG. 3, the apparatus of FIG. 1, and the systems of FIG. 2. The processors 416 may comprise one or more processors sold by Intel Corporation (e.g., Intel® Core™ processor family), Advanced Micro Devices (e.g., AMD Athlon™ processors), and other semiconductor manufacturers.

In some embodiments, the article 400 may comprise one or more processors 416 coupled to a display 418 to display data processed by the processor 416 and/or a wireless transceiver 420 (e.g., a down hole telemetry transceiver, or a local transmitter coupled to a data acquisition system) to receive and transmit data processed by the processor to another (remote) system.

The memory system(s) included in the article 400 may include memory 436 comprising volatile memory (e.g., dynamic random access memory) and/or non-volatile memory. The memory 436 may be used to store data 440 processed by the processor 416.

In various embodiments, the article 400 may comprise communication apparatus 422, which may in turn include amplifiers 426 (e.g., preamplifiers or power amplifiers) and one or more antenna 424 (e.g., transmitting antennas and/or receiving antennas). Signals 442 received or transmitted by the communication apparatus 422 may be processed according to the methods described herein.

Many variations of the article 400 are possible. For example, in various embodiments, the article 400 may comprise a down hole tool, including the apparatus 100 shown in FIG. 1. In some embodiments, the article 400 is similar to or identical to the apparatus 100 shown in FIG. 1.

Using the apparatus, systems, and methods disclosed herein may provide the ability to monitor changes in down hole cuttings, so that the impact of drilling fluid properties and activities in the field can be assessed immediately. This ability may be used to increase efficiency by redirecting pumping and drilling operations in real-time, perhaps as part of a closed-loop control system. Greater customer satisfaction may result.

The accompanying drawings that form a part hereof, show by way of illustration, and not of limitation, specific embodiments in which the subject matter may be practiced. The embodiments illustrated are described in sufficient detail to enable those skilled in the art to practice the teachings disclosed herein. Other embodiments may be utilized and derived therefrom, such that structural and logical substitutions and changes may be made without departing from the scope of this disclosure. This Detailed Description, therefore, is not to be taken in a limiting sense, and the scope of various embodiments is defined only by the appended claims.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

The Abstract of the Disclosure is provided to comply with 37 C.F.R. §1.72(b), requiring an abstract that will allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim.

## Claims

1. A processor-implemented method, comprising:
pumping drilling fluid into a bore hole (212) to move down hole cuttings (112) into a field of view of an imaging device (124), wherein the down hole cuttings within the field of view are proximate to the fluid;
reducing the contribution of the drilling fluid on the image produced by the imaging device, wherein the wavelengths of energy received at the imaging device are reduced by means of energy wavelength adjustment;
acquiring live video stream information from the imaging device, the information including down hole cuttings image information;
processing the down hole cuttings image information to determine data that quantifies at least one of a shape, a size distribution, or a volume of the down hole cuttings; and
publishing changes in the data in conjunction with probable conditions associated with a borehole drilling operation or a borehole pumping operation, wherein the changes in shape, size distribution, or volume of the downhole cuttings are correlated to one or more operational conditions.

2. The method of claim 1, wherein the acquiring further comprises:
acquiring the information from the imaging device having a field of view including a drilling mud screen.

3. The method of claim 1, wherein the processing comprises:
processing the information using a particle size analysis algorithm and/or using a three-dimensional facial recognition algorithm.

4. The method of claim 1, further comprising:
substantially continuously transmitting at least a portion of the data to a remote location, wherein, optionally, the transmitting further comprises:
transmitting at least a portion of the data to a real time log monitoring application program.

5. The method of claim 1, further comprising:
pumping fluid into a borehole to move the down hole cuttings into a field of view of the imaging device.

6. The method of claim 1, wherein the drilling fluid is drilling mud, the live video stream information includes drilling mud image information, and wherein the reducing further comprises:
reducing the number of the wavelengths of light used to create the live video stream information prior to the processing to separate the drilling mud image information from the down hole cuttings image information.

7. The method of claim 1, wherein the processing comprises:
binning the data to provide the size distribution of the cuttings.

8. The method of claim 1, wherein the conditions comprise at least one of:
rate of penetration, formation pore pressure, weight on bit, drill pipe torque, or drilling angle.

9. The method of claim 1, further comprising:
indicating an efficiency of the borehole drilling operation or the borehole pumping operation as a sweeping operation, based on the data.

10. An apparatus, comprising:
a mud pump (232) that pumps drilling fluid into a bore hole (212) to move down hole cuttings (112) into the field of view of an imaging device (124), wherein the down hole cuttings within the field of view are proximate to the fluid;
an energy modification device (120) interposed between the down hole cuttings and the imaging device, wherein the energy modification device is operable to reduce the contribution of the drilling fluid on the image produced by the imaging device, wherein wavelengths of energy received at the imaging device are reduced by means of energy wavelength adjustment;
an imaging device (124) to acquire live video stream information including down hole cuttings image information; and
a processor (130) to process the down hole cuttings image information to determine data that quantifies at least one of a shape, a size distribution, or a volume of the down hole cuttings, and to publish changes in the data in conjunction with probable conditions associated with a borehole drilling operation or a borehole pumping operation, wherein the changes in shape, size distribution, or volume of the downhole cuttings are correlated to one or more operational conditions.

11. The apparatus of claim 10, further comprising:
at least one of a polarizer, a filter, or a beam splitter to intercept energy reflected or emitted by the down hole cuttings, and to reduce an amount of the energy received by the imaging device.

12. The apparatus of claim 10, wherein the imaging device comprises:
at least one of a visible light camera or an infrared camera.

13. A system, comprising:
a mud pump (232) that pumps drilling fluid into a bore hole (212) to move down hole cuttings (112) into the field of view of an imaging device (124), wherein the down hole cuttings within the field of view are proximate to the fluid;
a drilling mud screen (108) to receive the drilling fluid and down hole cuttings, wherein the drilling mud screen is situated in the field of view of the imaging device;
an energy modification device (120) interposed between the drilling mud screen and the imaging device, wherein the energy modification device is operable to reduce the contribution of the drilling fluid on the image produced by the imaging device, wherein wavelengths of energy received at the imaging device are reduced by means of energy wavelength adjustment;
the imaging device (124) operable to generate live video stream information including down hole cuttings image information; and
a processor (130) to process the down hole cuttings image information to determine data that quantifies at least one of a shape, a size distribution, or a volume of the down hole cuttings, and to publish changes in the data in conjunction with probable conditions associated with a borehole drilling operation or a borehole pumping operation, wherein the changes in shape, size distribution, or volume of the down hole cuttings are correlated to one or more operational conditions.

14. The system of claim 13, wherein the drilling mud screen is included in a shaker deck.

15. The system of claim 13, further comprising:
a display to display the changes and the probable conditions; and/or a transmitter to transmit at least a portion of the data to a remote processor.

## Patentansprüche

1. Prozessorimplementiertes Verfahren, umfassend:
Pumpen von Bohrflüssigkeit in ein Bohrloch (212), um Bohrklein (112) in ein Sichtfeld einer Bildgebungsvorrichtung (124) zu bewegen, wobei das Bohrklein innerhalb des Sichtfeldes sich nahe der Flüssigkeit befindet;
Verringern des Anteils der Bohrflüssigkeit an dem Bild, das von der Bildgebungsvorrichtung erzeugt wird, wobei die Wellenlängen von Energie, die an der Bildgebungsvorrichtung empfangen werden, mithilfe einer Energiewellenlängenanpassung verringert werden;
Erfassen von Live-Videostream-Informationen von der Bildgebungsvorrichtung, wobei die Informationen Bildinformationen über Bohrklein beinhalten;
Verarbeiten der Bildinformationen über Bohrklein, um Daten zu ermitteln, die mindestens eines aus einer Form, einer Größenverteilung oder eines Volumens des Bohrkleins quantifizieren; und
Veröffentlichen von Veränderungen bei den Daten in Zusammenhang mit wahrscheinlichen Bedingungen, die einem Bohrloch-Bohrvorgang oder einem Bohrloch-Pumpvorgang zugeordnet sind, wobei die Veränderungen hinsichtlich Form, Größenverteilung oder Volumen des Bohrkleins mit einer oder mehreren Betriebsbedingungen korreliert sind.

2. Verfahren nach Anspruch 1, wobei das Erfassen ferner Folgendes umfasst:
Erfassen der Informationen von der Bildgebungsvorrichtung, die ein Sichtfeld aufweist, das einen Bohrschlammbildschirm beinhaltet.

3. Verfahren nach Anspruch 1, wobei das Verarbeiten Folgendes umfasst:
Verarbeiten der Informationen unter Verwendung eines Partikelgrößen-Analysealgorithmus und/oder unter Verwendung eines dreidimensionalen Gesichtserkennungsalgorithmus.

4. Verfahren nach Anspruch 1, ferner umfassend:
Im Wesentlichen kontinuierliches Senden von mindestens einem Teil der Daten an einen entfernten Standort, wobei das Senden optional ferner umfasst:
Senden von mindestens einem Teil der Daten an ein Anwendungsprogramm zur Protokollüberwachung in Echtzeit.

5. Verfahren nach Anspruch 1, ferner umfassend:
Pumpen von Flüssigkeit in ein Bohrloch, um Bohrklein in ein Sichtfeld der Bildgebungsvorrichtung zu bewegen.

6. Verfahren nach Anspruch 1, wobei die Bohrflüssigkeit Bohrschlamm ist, die Live-Videostream-Informationen Bildinformationen über den Bohrschlamm beinhalten und wobei das Verringern ferner umfasst:
Verringern der Anzahl von Wellenlängen von Licht, die verwendet werden, um die Live-Videostream-Informationen vor dem Verarbeiten zu erzeugen, um die Bildinformationen über den Bohrschlamm von den Bildinformationen über Bohrklein zu trennen.

7. Verfahren nach Anspruch 1, wobei das Verarbeiten Folgendes umfasst:
Klasseneinteilung der Daten, um die Größenverteilung des Bohrkleins bereitzustellen.

8. Verfahren nach Anspruch 1, wobei die Bedingungen mindestens eines umfassen von:
Penetrationsrate, Formationsporendruck, Meißelbelastung, Bohrgestänge-Drehmoment oder Bohrwinkel.

9. Verfahren nach Anspruch 1, ferner umfassend:
Angeben einer Effizienz des Bohrloch-Bohrvorgangs oder des Bohrloch-Pumpvorgangs als Austragungsvorgang basierend auf den Daten.

10. Vorrichtung, umfassend:
eine Schlammpumpe (232), die Bohrflüssigkeit in ein Bohrloch (212) pumpt, um Bohrklein (112) in das Sichtfeld einer Bildgebungsvorrichtung (124) zu bewegen, wobei das Bohrklein innerhalb des Sichtfeldes sich nahe der Flüssigkeit befinden;
eine Energiemodifizierungsvorrichtung (120), die zwischen dem Bohrklein und der Bildgebungsvorrichtung eingesetzt ist, wobei die Energiemodifizierungsvorrichtung betreibbar ist, um den Anteil der Bohrflüssigkeit an dem Bild zu verringern, das von der Bildgebungsvorrichtung erzeugt wird, wobei Wellenlängen von Energie, die an der Bildgebungsvorrichtung empfangen werden, mithilfe einer Energiewellenlängenanpassung verringert werden;
eine Bildgebungsvorrichtung (124), um Live-Videostream-Informationen zu erfassen, die Bildinformationen über Bohrklein beinhalten; und
einen Prozessor (130), um die Bildinformationen über Bohrklein zu verarbeiten, um Daten zu ermitteln, die mindestens eines aus einer Form, einer Größenverteilung oder eines Volumens des Bohrkleins quantifizieren, und um Veränderungen bei den Daten in Zusammenhang mit wahrscheinlichen Bedingungen zu veröffentlichen, die einem Bohrloch-Bohrvorgang oder einem Bohrloch-Pumpvorgang zugeordnet sind, wobei die Veränderungen hinsichtlich Form, Größenverteilung oder Volumen des Bohrkleins mit einer oder mehreren Betriebsbedingungen korreliert sind.

11. Vorrichtung nach Anspruch 10, ferner umfassend:
mindestens eines aus einem Polarisator, einem Filter oder einem Strahlteiler, um Energie, die von dem Bohrklein reflektiert oder emittiert wird, abzufangen und um eine Menge der Energie, die von der Bildgebungsvorrichtung empfangen wird, zu verringern.

12. Vorrichtung nach Anspruch 10, wobei die Bildgebungsvorrichtung Folgendes umfasst:
mindestens eine von einer Kamera für sichtbares Licht oder einer Infrarotkamera.

13. System, umfassend:
eine Schlammpumpe (232), die Bohrflüssigkeit in ein Bohrloch (212) pumpt, um Bohrklein (112) in das Sichtfeld einer Bildgebungsvorrichtung (124) zu bewegen, wobei das Bohrklein innerhalb des Sichtfeldes sich nahe der Flüssigkeit befindet;
einen Bohrschlammbildschirm (108), um die Bohrflüssigkeit und Bohrklein zu empfangen, wobei der Bohrschlammbildschirm sich in dem Sichtfeld der Bildgebungsvorrichtung befindet;
eine Energiemodifizierungsvorrichtung (120), die zwischen dem Bohrschlammbildschirm und der Bildgebungsvorrichtung eingesetzt ist, wobei die Energiemodifizierungsvorrichtung betreibbar ist, um den Anteil der Bohrflüssigkeit an dem Bild zu verringern, das von der Bildgebungsvorrichtung erzeugt wird, wobei Wellenlängen von Energie, die an der Bildgebungsvorrichtung empfangen werden, mithilfe einer Energiewellenlängenanpassung verringert werden;
die Bildgebungsvorrichtung (124), die betreibbar ist, um Live-Videostream-Informationen zu erzeugen, die Bildinformationen über Bohrklein beinhalten; und
einen Prozessor (130), um die Bildinformationen über Bohrklein zu verarbeiten, um Daten zu ermitteln, die mindestens eines aus einer Form, einer Größenverteilung oder eines Volumens des Bohrkleins quantifizieren, und um Veränderungen bei den Daten in Zusammenhang mit wahrscheinlichen Bedingungen zu veröffentlichen, die einem Bohrloch-Bohrvorgang oder einem Bohrloch-Pumpvorgang zugeordnet sind, wobei die Veränderungen hinsichtlich der Form, Größenverteilung oder Volumen des Bohrkleins mit einer oder mehreren Betriebsbedingungen korreliert sind.

14. System nach Anspruch 13, wobei der Bohrschlammbildschirm in einem Schüttlerdeck beinhaltet ist.

15. System nach Anspruch 13, ferner umfassend:
eine Anzeige, um die Veränderungen und die wahrscheinlichen Bedingungen anzuzeigen; und/oder einen Sender, um mindestens einen Teil der Daten an einen entfernten Prozessor zu senden.

## Revendications

1. Procédé implémenté par un processeur, comprenant :
le pompage d'un fluide de forage dans un puits de forage (212) pour déplacer des déblais de fond de puits (112) dans un champ de vision d'un dispositif d'imagerie (124), dans lequel les déblais de fond de puits dans le champ de vision sont à proximité du fluide ;
la réduction de la contribution du fluide de forage sur l'image produite par le dispositif d'imagerie, dans lequel les longueurs d'onde d'énergie reçues au niveau du dispositif d'imagerie sont réduites au moyen d'un ajustement de longueur d'onde d'énergie ;
l'acquisition d'informations de flux vidéo en direct à partir du dispositif d'imagerie, les informations comprenant des informations d'image de déblais de fond de puits ;
le traitement des informations d'image de déblais de fond de puits pour déterminer des données qui quantifient au moins l'un parmi une forme, une distribution de taille ou un volume des déblais de fond de puits ; et
la publication des changements dans les données en conjonction avec des conditions probables associées à une opération de forage de puits de forage ou à une opération de pompage de puits de forage, dans lequel les changements de forme, de distribution de taille ou de volume des déblais de fond puits sont corrélés à une ou plusieurs conditions opérationnelles.

2. Procédé selon la revendication 1, dans lequel l'acquisition comprend en outre :
l'acquisition des informations du dispositif d'imagerie ayant un champ de vision comprenant un tamis de boue de forage.

3. Procédé selon la revendication 1, dans lequel le traitement comprend :
le traitement des informations à l'aide d'un algorithme d'analyse de la granulométrie et/ou à l'aide d'un algorithme de reconnaissance faciale tridimensionnelle.

4. Procédé selon la revendication 1, comprenant en outre :
la transmission sensiblement en continu d'au moins une partie des données à un emplacement distant, dans lequel, éventuellement, la transmission comprend en outre :
la transmission d'au moins une partie des données à un programme d'application de surveillance de journal en temps réel.

5. Procédé selon la revendication 1, comprenant en outre :
le pompage de fluide dans un puits de forage pour déplacer les déblais de fond de puits dans un champ de vision du dispositif d'imagerie.

6. Procédé selon la revendication 1, dans lequel le fluide de forage est de la boue de forage, les informations de flux vidéo en direct comprennent des informations d'image de boue de forage, et dans lequel la réduction comprend en outre :
la réduction du nombre de longueurs d'onde de lumière utilisées pour créer les informations de flux vidéo en direct avant le traitement pour séparer les informations d'image de boue de forage des informations d'image de déblais de fond de puits.

7. Procédé selon la revendication 1, dans lequel le traitement comprend :
le regroupement des données pour fournir la distribution de taille des déblais.

8. Procédé selon la revendication 1, dans lequel les conditions comprennent l'un au moins parmi :
le taux de pénétration, la pression interstitielle de la formation, le poids sur le trépan, le couple de tige de forage ou l'angle de forage.

9. Procédé selon la revendication 1, comprenant en outre :
l'indication d'une efficacité de l'opération de forage de puits de forage ou de l'opération de pompage de puits de forage en tant qu'opération de balayage, sur la base des données.

10. Appareil comprenant :
une pompe à boue (232) qui pompe le fluide de forage dans un puits de forage (212) pour déplacer les déblais de fond de puits (112) dans le champ de vision d'un dispositif d'imagerie (124), dans lequel les déblais de fond de puits dans le champ de vision sont à proximité du fluide ;
un dispositif de modification d'énergie (120) interposé entre les déblais de fond de puits et le dispositif d'imagerie, dans lequel le dispositif de modification d'énergie peut fonctionner pour réduire la contribution du fluide de forage sur l'image produite par le dispositif d'imagerie, dans lequel les longueurs d'onde d'énergie reçues au niveau du dispositif d'imagerie sont réduites au moyen d'un ajustement de longueur d'onde d'énergie ;
un dispositif d'imagerie (124) pour acquérir des informations de flux vidéo en direct, y compris des informations d'image de déblais de fond de puits ; et
un processeur (130) pour traiter les informations d'image de déblais de fond de puits pour déterminer des données qui quantifient au moins l'un parmi une forme, une distribution de taille ou un volume des déblais de fond de puits, et pour publier des changements dans les données en conjonction avec des conditions probables associées à une opération de forage de puits de forage ou à une opération de pompage de puits de forage, dans lequel les changements de forme, de distribution de taille ou de volume des déblais de fond de puits sont corrélés à une ou plusieurs conditions opérationnelles.

11. Appareil selon la revendication 10, comprenant en outre :
au moins l'un parmi un polariseur, un filtre ou un séparateur de faisceau pour intercepter l'énergie réfléchie ou émise par les déblais de fond de puits et pour réduire une quantité d'énergie reçue par le dispositif d'imagerie.

12. Appareil selon la revendication 10, dans lequel le dispositif d'imagerie comprend :
au moins une parmi une caméra à lumière visible ou une caméra infrarouge.

13. Système, comprenant :
une pompe à boue (232) qui pompe le fluide de forage dans un puits de forage (212) pour déplacer les déblais de fond de puits (112) dans le champ de vision d'un dispositif d'imagerie (124), dans lequel les déblais de fond de puits dans le champ de vision sont à proximité du fluide ;
un tamis de boue de forage (108) pour recevoir le fluide de forage et les déblais de fond de puits, dans lequel le tamis de boue de forage est situé dans le champ de vision du dispositif d'imagerie ;
un dispositif de modification d'énergie (120) interposé entre le tamis de boue de forage et le dispositif d'imagerie, dans lequel le dispositif de modification d'énergie peut fonctionner pour réduire la contribution du fluide de forage sur l'image produite par le dispositif d'imagerie, dans lequel les longueurs d'onde d'énergie reçues au niveau du dispositif d'imagerie sont réduites au moyen d'un ajustement de longueur d'onde d'énergie ;
le dispositif d'imagerie (124) pouvant fonctionner pour générer des informations de flux vidéo en direct, y compris des informations d'image de déblais de fond de puits ; et
un processeur (130) pour traiter les informations d'image de déblais de fond de puits pour déterminer des données qui quantifient au moins l'un parmi une forme, une distribution de taille ou un volume des déblais de fond de puits, et pour publier des changements dans les données en conjonction avec des conditions probables associées à une opération de forage de puits de forage ou à une opération de pompage de puits de forage, dans lequel les changements de forme, de distribution de taille ou de volume des déblais de fond de puits sont corrélés à une ou plusieurs conditions opérationnelles.

14. Système selon la revendication 13, dans lequel le tamis de boue de forage est inclus dans un plateau de secoueur.

15. Système selon la revendication 13, comprenant en outre :
un affichage pour afficher les changements et les conditions probables ; et/ou un émetteur pour transmettre au moins une partie des données à un processeur distant.
